# EUROPÄISCHE PATENTANMELDUNG

(11) **EP 3 296 055 A1**
(43) Veröffentlichungstag der Anmeldung: **21.03.2018**
(21) Anmeldenummer: 16002016.0
(22) Anmeldetag: 16.09.2016
(51) Int. Cl.: B23K 37/053, B23K 20/12, B23K 101/06

(54) **VORRICHTUNG UND VERFAHREN ZUM VOLLKOMMENEN RÜHRREIB-DURCHSCHWEISSEN EINER RUNDNAHT AN ROTATIONSSYMMETRISCHEN HOHLKÖRPERN**

(71) Anmelder: Wartmann Technologie AG, 4538 Oberbipp (CH)
(72) Erfinder: Bäerfuss, Bernhard, 3006 Bern (CH); Bracher, Roger, 3400 Burgdorf (CH)
(74) Vertreter: Daub, Thomas

(57) **Zusammenfassung**

Die Erfindung betrifft eine Vorrichtung zum vollkommenen Durchschweißen einer Rundnaht an rotationssymmetrischen Hohlkörpern. Die Aufgabe der Erfindung besteht darin, eine vollkommene Durchschweißung rührreibgeschweißter Rundnähte an druckbeaufschlagten Hohlkörpern zu erreichen, ohne die Eindringtiefe des Rührreibschweißstiftes in den Stoß bei gleichzeitiger Vereinfachung der Anlagentechnik unter Gewährleistung wirtschaftlicher Vorteile zu ermitteln. Dafür sind die Primär- und Sekundärbacken (32, 33) der Zentrier- und Spannscheibe mit einer quer zur Hohlkörperachse der Hohlkörper zueinander fluchtend umlaufenden Vertiefung (38) versehen, wobei der Rührreibschweißstift mit seiner Spitze durch den Stoß hindurch eine Eintauchtiefe hat, die größer als die tatsächliche Wanddicke der Hohlkörper ist und, dass die Rundnaht eine an die Vertiefung (38) angepasste Schweißnahtwurzel aufweist.

## Beschreibung

Die Erfindung betrifft eine Vorrichtung zum vollkommenen Durchschweißen einer Rundnaht an rotationssymmetrischen Hohlkörpern, beispielsweise einer Flansch-Rohr-Flansch-, Flansch-Rohr- oder Rohr-Rohr-Anordnung, die durch Rührreibschweißen im Stoß miteinander verbunden werden, mit einem sich an den Innendurchmesser der Hohlkörper anpassbaren, mittig zur Hohlkörperachse angeordneten Spannkörper, wobei der Spannkörper als Schweißbadsicherung in Form einer in kreissegmentförmige Primär und Sekundärbacken aufgeteilten Zentrier- und Spannscheibe ausgebildet ist, einem die in Einspanneinheiten gehaltenen Hohlkörper um ihre Hohlkörperachse in Rotation versetzenden Antrieb, einem Rührreibschweißwerkzeug, das einen gegenüber dem Stoß vorschieb- und zurückziehbaren rotierbaren Rührschweißstift aufweist und einer Steuerung, die mit dem Antrieb und dem Rührreibschweißwerkzeug zum Einstellen der Anpresskräfte und der Rotationsgeschwindigkeit der Hohlkörper, zur Einstellung der Rotationsgeschwindigkeit des Rührreibschweißwerkzeugs und der Lage des Rührreinschweißwerkzeugs zum Stoß verbunden ist.

Die Erfindung betrifft weiterhin ein Verfahren zum vollkommenen Durchschweißen einer Rundnaht von Stumpfstößen rotationssymmetrischer Hohlkörper, bei dem die rotationssymmetrischen Hohlkörper im Stoß durch eine sich an den Innendurchmesser der Hohlkörper anpassbaren in Form einer in kreissegmentförmige Primär und Sekundärbacken aufgeteilten Zentrier- und Spannscheibe fixiert und um die Hohlkörperachse mit einem Antrieb in Rotation versetzt werden, während in den rotierenden Stoß ein vorschieb- und zurückziehbarer rotierender Rührreibschweißstift eines Rührreibschweißwerkzeuges eintaucht, wobei die Rotationsgeschwindigkeit der Hohlkörper, die Drehgeschwindigkeit und die Anpresskraft des Rührreibschweißwerkzeuges sowie die Lage des Rührreibschweißwerkzeugs zur Lage des Stoßes über einen Sensor durch eine Steuerung eingestellt wird.

### Stand der Technik

Das Rührreibschweißen ist ein Fügeverfahren mit vielen sich gegenseitig beeinflussenden Parametern, die aus dem Bauteil, den Spannelementen, der Werkzeugkonfiguration und dem Schweißprozess wie die Anpresskraft, Eintauchtiefe, Anstellwinkel, Drehzahl und Geschwindigkeit des Werkzeuges resultieren. Bei der Herstellung von Druckbehältern ist die Einschweißtiefe von ganz wesentlicher Bedeutung, weil diese die Durchschweißung garantiert. Durchschweißfehler treten auf, sobald der Rührreibschweißstift eine zu geringe Eintauchtiefe in den Stoßbereich hat, wodurch im Bereich der Nahtwurzel eine zu geringe Werkstoffdurchmischung der Fügepartner entsteht, die eine Kerbe mit Kerbwirkung verursacht und die Festigkeit der Verbindung reduziert. Nähert sich jedoch die Spitze des Rührstiftes der Rückseite des Bauteils, also der stützenden Auflage, an, steigt die Gefahr, dass die Unterlage mit dem Bauteil ungewollt verschweißt wird.
Im Stand der Technik (Abschlussbericht "Erarbeitung von Konzepten zur Bewertung der Eignung von Anlagen für das Rührreibschweißen sowie zur Übertragbarkeit von Schweißparameters" des Institutes für Werkzeugmaschinen und Betriebswirtschaft der TU München und des Institutes für Materialprüfung, Werkstoffkunde und Festigkeitslehre der Universität Stuttgart, siehe (www.mpa.unistuttgart.de/forschung/.../pdf.../rührreibschweißen.pdf, S.57) liegen die angegebenen Eintauchtiefen in Abhängigkeit von unterschiedlichen Maschinennachgiebigkeiten zwischen 0,15 bis 0,25 mm. Dies macht deutlich, dass durch die Ungenauigkeiten der Wandstärken von beispielsweise Flansch und Rohr als Fügepartner, der Abweichungen der Distanzmessung vom Rührreibschweißwerkzeug zur Oberfläche des Flansches und den Ungenauigkeiten der Positionsregelung des Rührreibschweißwerkzeuges während der Rotation der Fügepartner Anforderungen gestellt werden, die den Aufwand unverhältnismäßig erhöhen und das Rührreibschweißen von Stumpfstößen bei Rohren auf Grund von auftretenden Durchschweißfehlern zunehmend unwirtschaftlich machen.

Aus der DE 10 2009 040 526 A1 ist ein Verfahren zur Herstellung eines Bauteils aus zwei ebenen Werkstücken durch Rührreibschweißen mit einem rotierbaren Werkzeug bekannt, bei dem durch das Einleiten einer zusätzlichen Prozesskraft in das Werkzeug ein Richtung dieser Proesskraft ausgebildeter Bauteilbereich entsteht, der in der Fügezone ein versetzter Bauteilbereich mit einem zurückversetzten Flächenabschnitt und mit einem entgegengesetzten hervorstehenden Flächenabschnitt ausbildet. Der hervorstehende Flächenabschnitt wird dann zumindest abschnittsweise eingeebnet, so dass die Fügezone verformt und beim Schweißen ein Sockel ausgebildet wird, der durch Fräsen entfernt wird, wodurch der nachteilige Nahteinfall beseitigt wird.
Diese bekannte technische Lösung ist nicht auf Stumpfstoßverbindungen rotationssymmetrischer Hohlkörper anwendbar.

Des Weiteren ist aus der WO 2013/026575 A1 eine Schweißbadsicherung in Form einer Zentrier-, Innenform-, Richt- und Spannscheibe für das Rührreibschweißen von Stumpfstößen an Hohlkörpern bekannt, die Primär- und Sekundärbacken umfassen, welche durch einen Antrieb radial gegen die inneren Flächen der aneinanderstoßenden Körper gedrückt werden. Diese bekannte technische Lösung weist des Weiteren ein Rührreinschweißwerkzeug mit einem drehenden Rührreibschweißstift auf, der in den Stumpfstoß der beiden Hohlkörper eintaucht, die Materialbereiche erweicht, rührt und während eines Umlaufes miteinander verbindet, wobei die Lage des Stumpfstoßes durch einen Sensor ermittelt wird, der mit einer Steuerung für die Einstellung des Rührreibschweißwerkzeuges verbunden ist.
Bei diesem bekannten Stand der Technik ist die Einstellung einer definierten Eindringtiefe des Rührreibschweißstiftes in den Stumpfstoß anlagentechnisch sehr aufwändig und kompliziert, um eine vollkommene Durchschweißung der Rundnähte von druckbeaufschlagten Hohlkörpern zu gewährleisten.

### Aufgabenstellung

Bei diesem Stand der Technik liegt der Erfindung die Aufgabe zugrunde, eine vollkommene Durchschweißung rührreibgeschweißter Rundnähte an druckbeaufschlagten Hohlkörpern zu erreichen, ohne die Eindringtiefe des Rührreibschweißstiftes in den Stoß bei gleichzeitiger Vereinfachung der Anlagentechnik unter Gewährleistung wirtschaftlicher Vorteile ermitteln zu müssen.

Diese Aufgabe wird durch eine Vorrichtung und ein Verfahren der eingangs genannten Art mit den Merkmalen des Anspruches 1 und 5 gelöst.

Vorteilhafte Ausgestaltungen der Vorrichtung und des Verfahrens sind den Unteransprüchen entnehmbar.

Die erfindungsgemäße Lösung geht von der Erkenntnis aus, den Rührreibschweißstift mit seiner Spitze durch den Stoß der beiden Hohlkörper hindurchzubewegen und an der Unterseite des Stoßes gezielt eine Schweißnahtwurzel auszubilden, wodurch sichergestellt ist, dass sich der Rührund Mischbereich vollkommen im Stoßbereich der Hohlkörper befindet.
Dies wird dadurch erreicht, dass die Primär- und Sekundärbacken der Zentrier- und Spannscheibe mit einer quer zur Hohlkörperachse der Hohlkörper zueinander fluchtend umlaufenden Vertiefung versehen sind, wobei der Rührreibschweißstift mit seiner Spitze durch den Stoß hindurch eine Eintauchtiefe hat, die größer als die tatsächliche Wanddicke der Hohlkörper ist und dass die Rundnaht eine an die Vertiefung angepasste Schweißnahtwurzel aufweist.

In einer bevorzugten Ausgestaltung der erfindungsgemäßen Vorrichtung ist vorgesehen, dass die Vertiefung mindestens eine Höhe aufweist, die an den für eine fehlerlose Durchschweißung erforderlichen Abstand der Spitze des Rührreibschweißstiftes zur Rückwandseite der Hohlkörper im Stoß angepasst ist.
Dies stellt sicher, dass die sich aus einer fehlerhaften Eintauchtiefe des Rührreibschweißstiftes ergebende zu geringe Durchmischung des Werkstoffes der Fügepartner in den Bereich der Vertiefung verschoben wird, wodurch im Stoßbereich der Fügepartner eine vollkommene Durchschweißung entsteht.
In Abhängigkeit der Wanddicken haben sich Höhen für die Vertiefung zwischen 0,2 bis 5 mm erwiesen.

In weiterer Ausgestaltung der erfindungsgemäßen Vorrichtung hat die Vertiefung eine Breite, die den Durchmesser des Rührschweißstiftes um maximal das 2fache übersteigt. Dadurch bildet sich an der Rückwandseite des Stoßes eine Schweißnahtwurzel aus, die an die Form und geometrische Abmessung der Vertiefung angepasst ist.

Von besonderer Bedeutung für eine vollkommene Durchschweißung ist es, dass der Bereich der Schweißnahtwurzel der Rundnaht an den gefügten Hohlkörpern mechanisch, vorzugsweise durch Fräsen oder Schleifen, eingeebnet wird.

Die Aufgabe wird weiter mit einem Verfahren durch folgende Schritte gelöst:
a) Vorsehen einer in die Primär- und Sekundärbacken eingebrachten quer zur Hohlkörperachse zueinander fluchtend umlaufenden Vertiefung, die an die Art, Form und geometrische Abmessung des Rührreibschweißstiftes, der Wanddicke im Stoß und dem Werkstoff der Fügepartner angepasst ist;
b) Positionieren dieser Vertiefung unter dem Stoß entsprechend seiner ermittelten Lage;
c) Eintauchen des Rührreibschweißstiftes mit seiner Spitze durch den Stoß hindurch soweit in die Vertiefung bis seine Eindringtiefe einen Wert erreicht, der größer ist als die tatsächliche Wanddicke der Hohlkörper,
d) Ausbilden einer Schweißnahtwurzel in der Vertiefung und
e) Abtrennen der Schweißnahtwurzel durch Fräsen oder Schleifen.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an einem Ausführungsbeispiel für ein Flansch-Rohr-Flansch-Element näher erläutert werden.

### Es zeigen

Fig. 1 eine schematische Darstellung einer Rührreibschweißanlage in Seitenansicht mit einer Flansch -Rohr-Flansch-Anordnung nach dem Stand der Technik,
Fig. 2 eine Schnittdarstellung eines in den Stoßbereich zweier Hohlkörper eingesetzten Zentrier-, Innenform-, Richt- und Spannscheibe nach dem Stand der Technik,
Fig. 3 eine perspektivische Darstellung der Zentrier- und Spannscheibe im ungespannten Zustand nach dem Stand der Technik,
Fig. 4 eine perspektivische Darstellung der erfindungsgemäßen Zentrier- und Spannscheibe im ungespannten Zustand,
Fig. 5 eine Schnittdarstellung des Fügebereiches im Stoß der beiden Hohlkörper mit in die Vertiefung eingetauchten Rührreibschweißstift,
Fig. 6 eine Darstellung des Fügebereichs im Stoß der beiden Hohlkörper im Schnitt mit schematischer Ansicht von charakteristischen Merkmalen einer Rührreibschweißnaht gemäß Fig. 4 und
Fig. 7 eine Darstellung des Fügebereichs im Stoß mit eingeebneter Schweißnahtwurzel.

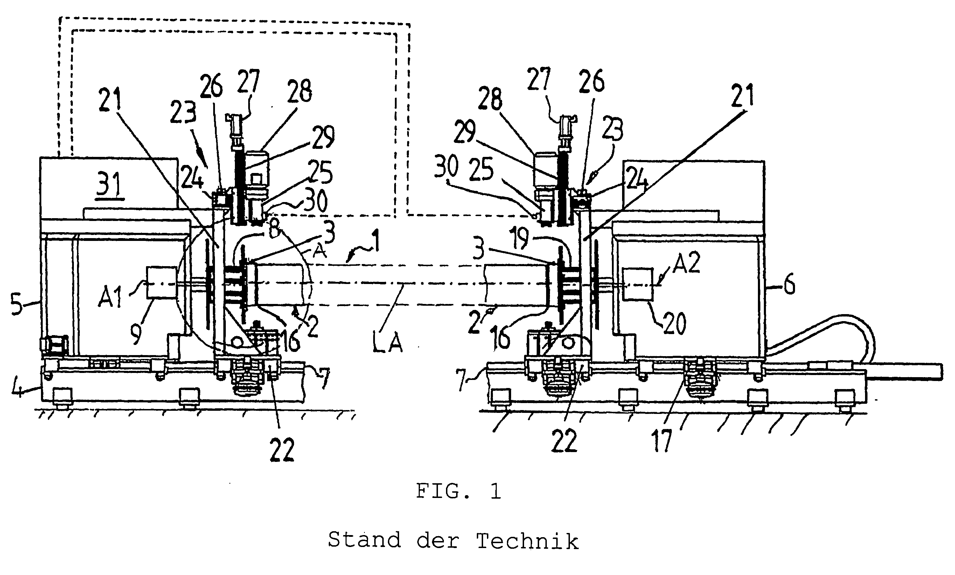

Die Fig. 1 zeigt eine Rührreibschweißanlage zum Rührreibschweißen einer im Stoß zu verbindenden Flansch-Rohr-Flansch-Anordnung 1 nach dem Stand der Technik.
Die Flansch-Rohr-Flanschanordnung 1 setzt sich aus einem Aluminiumrohr 2 und zwei an den Enden des Aluminiumrohr 2 anzusetzende Flansche 3 zusammen. Das Aluminiumrohr 2 und die Flansche 3 haben einen identischen Innendurchmesser. Die Nennwanddicke d von Flansch und Rohr beträgt 7 mm und die Länge des Rohres 7600 mmm.
Die Anlage besitzt zwei im Abstand voneinander und in Flucht gegenüber angeordnete Einspanneinheiten 5 und 6, von denen die Einspanneinheit 5 ortsfest festliegt und die Einspanneinheit 6 auf an einem Maschinenbett 4 verlegten Laufschienenpaar 7 verfahrbar ist.

Die ortsfeste Einspanneinheit 5 hat eine Aufnahme 8 für den Flansch 3, welche um eine horizontale Drehachse A1 drehbar ist und von einem Direktantrieb 9 angetrieben wird. Die verfahrbare Einspanneinheit 6 umfasst einen eigenen Antrieb 17 zum Verfahren der Einspanneinheit auf dem Laufschienenpaar in Richtung der Einspanneinheit 5 und eine Bremse 18 zum Arretieren der Lage der Einspanneinheit 6 auf dem Laufschienenpaar 7. Zur Einspanneinheit 6 gehört des Weiteren eine Aufnahme 19, die drehbar um die Achse A2 ist, und ein Direktantrieb 20.
Das axiale Einspannen des Rohres 2 zwischen den Flanschen 3 wird pneumatisch durchgeführt.
Jeder Einspanneinheit 5 bzw. 6 ist ein Brückenträger 21 zugeordnet, der mittels eines Servomotors 22 auf dem Laufschienenpaar 7 -also in x-Richtung- verfahrbar ist. Der Brückenträger 21 umgreift die Aufnahmen 8 bzw. 19 und lässt sich somit in x-Richtung in eine exakte Lage über den Stoß 16 verfahren und arretieren. An der Brücke 23 des Brückenträgers 21 ist ein Kreuzschlitten 24 befestigt, mit dem das Rührreibschweißwerkzeug 25 mittels eines Servomotors
26 in y-Richtung und eines Servomotors 27 in z-Richtung positioniert werden kann. Die zum Rührreibschweißen erforderlichen Anpresskräfte zwischen dem Rührreibschweißwerkzeug 25 und dem Stoß 16 werden durch eine mit einer von einem Motor 28 angetriebenen Werkzeugspindel 29 aufgebracht.

Dem Rührreibschweißwerkzeug 25 ist ein Sensor 30 zugeordnet, der die Lage des Stoßes 16 abtastet, mit seiner Auswerteelektronik die Lage des Stoßes ermittelt und diese an eine Hauptsteuerung 31 zur Einstellung des Rührreibschweißwerkzeuges 25 in Bezug auf den Stoß 16 weitergibt.

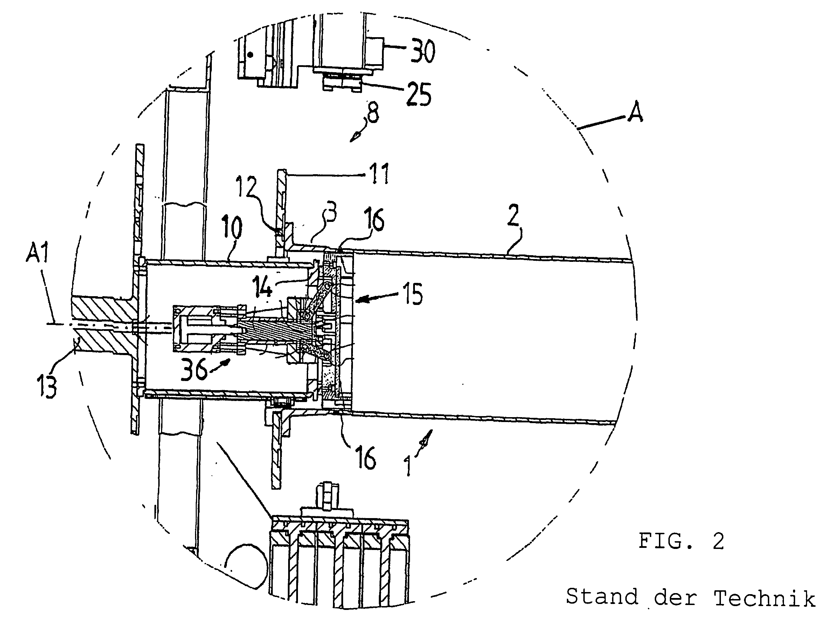

Die Fig. 2 zeigt den Stoßbereich von Flansch 3 und Rohr 2 nach dem Stand der Technik gemäß WO 2013/026573. Die Aufnahme 8 besteht aus einer zylindrischen Hülse 10 und einer an der Hülse lösbar befestigten Flanschscheibe 11, welche mindestens einen Lochkreis aus Bohrungen 12 zur Befestigung des Flansches 3 aufweist.
Die Hülse 10 ist einerends an der Antriebswelle 13 befestigt und weist anderenends einen Befestigungsflansch 14 zur Befestigung der Zentrier- und Spannscheibe 15 auf.

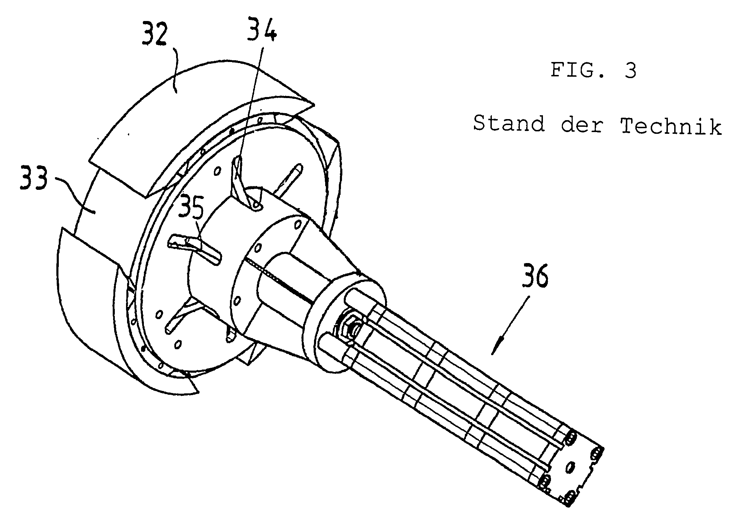

Die Fig. 3 stellt die aus dem Stand der Technik bekannte Zentrier- und Spannscheibe 15 dar, die Primärbacken 32 und Sekundärbacken 33 umfasst, welche über Primärhebel 34 und Sekundärhebel 35 mit einem Antrieb 36 verbunden ist. Die Primärbacken 32 und Sekundärbacken 33 bilden im gespannten Zustand entlang ihres äußeren Umfanges einen vollkommen geschlossenen Stirnbereich, der den Flansch 3 und das Rohr 2 in ihrem Stoßbereich zueinander zentriert und die Anpresskräfte des Rührreibschweißwerkzeuges 25 als Widerlager aufnimmt.

Das Rührreibschweißwerkzeug 25 entspricht in seinem Aufbau dem Stand der Technik nach WO 2013/026573, so dass eine weitergehende Beschreibung entfallen kann.

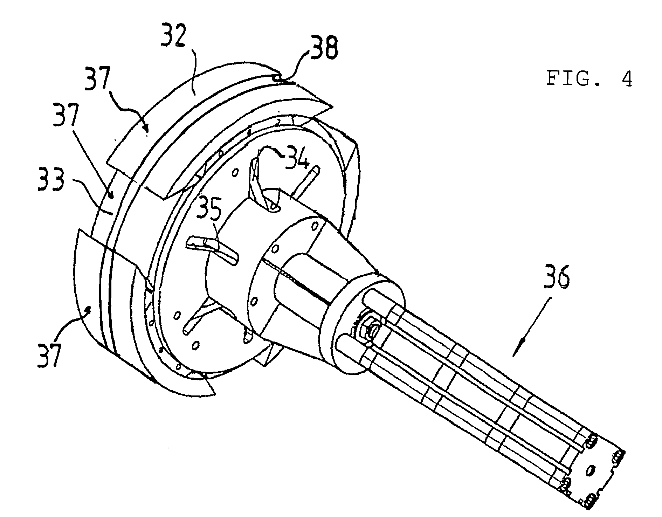

Es wird jetzt auf die Fig. 4 genommen, die die nach der Erfindung geänderte Zentrier- und Spannscheibe 15 zeigt. In die Oberseite 37 der Primärbacken 32 und Sekundärbacken 33 ist eine nutartige Vertiefung 38 eingebracht, die quer zur Hohlkörperachse HA ausgerichtet ist und in den Oberseiten 37 der Primärbacken 32 und Sekundärbacken 33 zueinander fluchtend und umlaufend verläuft. Die Vertiefung 38 in den Primärbacken 32 und Sekundärbacken 33 wird so in dem auf Stoß 17 liegenden Flansch 3 und Rohr 2 positioniert, dass im gespannten Zustand der Zentrier- und Spannscheibe 15 die Vertiefung 38 unterhalb des Stoßes 16 liegt, letzteren überdeckt und einen Auffangraum 39 zum Ausbilden einer Schweißnahtwurzel 40 durch den Werkstoff der Fügepartner aufweist.

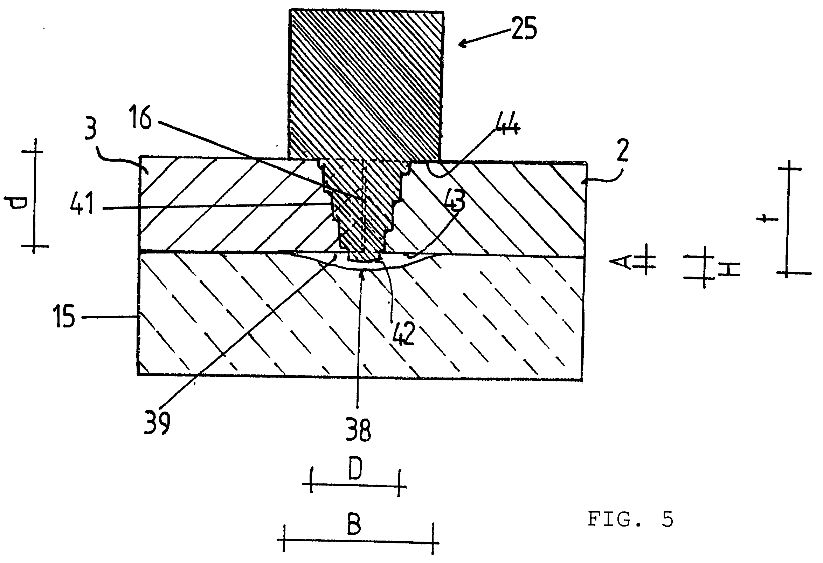

In der Fig. 5 ist der Stoß 16 von Flansch 3 und Rohr 2 sowie der Bereich der den Stoß 16 abstützenden Zentrier- und Spannscheibe 15 mit der Vertiefung 38 im Schnitt gezeigt, bei dem sich der Rührreibschweißstift 41 des Rührreibschweißwerkzeugs 25 mit seiner Spitze 42 mit einer Eindringtiefe t bis in die Vertiefung 38 durch den Werkstoffbereich der beiden Fügepartner hineinbewegt hat. Die zu wählende Höhe H der Vertiefung 38 richtet sich nach dem Abstand A der Spitze 42 des Rührreibschweißstiftes 41 zur Rückwandseite 43 der Fügepartner im Stoß 16, der notwendig wäre, um eine vollkommene Durchschweißung im Stoß 16 ohne die Vertiefung 38 zu erreichen. Im vorliegenden Beispiel beträgt der Abstand 1 mm, kann aber auch zwischen 0,5 bis 2 mm liegen.
Die Breite B der Vertiefung 38 ist abhängig von der Nennwanddicke d der Fügepartner im Stoß 16, dem Durchmesser D des Rührreibschweißstiftes 41 und dessen Geometrie sowie dem Werkstoff der Fügepartner. Vorteilhafterweise wird die Breite B so bemessen sein, dass die Vertiefung 38 in vertikaler Projektion bis in den Schulterbereich 45 des Rührreibschweißstiftes 41 reicht und den Stoß 16 deutlich überdeckt, wodurch der Auffangraum 39 ein ausreichendes Volumen für die Aufnahme des in der Mischzone gerührten Werkstoffes der Fügepartner aufweist. In diesem Beispiel beträgt die Breite B 10 mm, kann aber im Bereich des 2fachen des Durchmessers des Rührreibschweißstiftes 41 liegen.

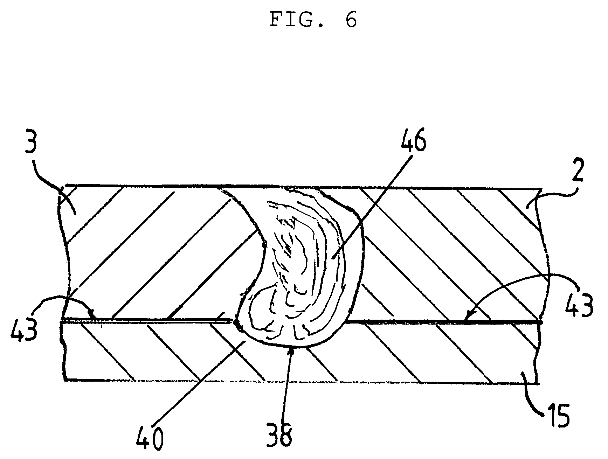

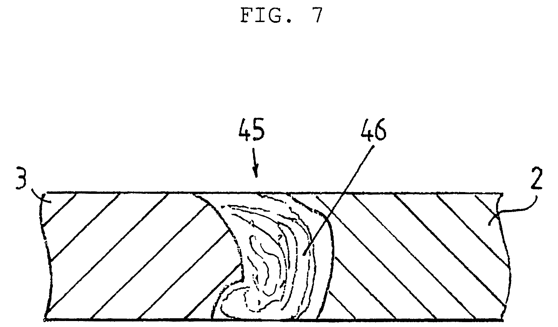

Die Fig. 6 zeigt den Fügebereich im Stoß 16 der beiden Fügepartner im Schnitt mit Darstellung der charakteristischen Merkmale einer Rührreibschweißnaht 45, die u.a. aus einer Nugget- oder Mischzone 46 besteht 7. Man erkennt, dass sich die Mischzone 46 bis in die Vertiefung 38 verschoben hat, wodurch die unzureichende Durchmischung des Werkstoffs der Fügepartner unter der Spitze 42 des Rührreibschweißstiftes 41 in die Schweißnahtwurzel 40 gelangt, die anschließend mechanisch, beispielsweise durch Schleifen oder Fräsen entfernt wird und somit keine Rolle für nachteilig wirkende Kerben mehr spielen kann (siehe Fig. 7).

Nachfolgend wird das erfindungsgemäße Verfahrensbeschrieben, das in folgenden Schritten abläuft:
a) Vorsehen einer in die Primär- und Sekundärbacken 32 und 33 eingebrachten quer zur Hohlkörperachse LA zueinander fluchtend umlaufenden Vertiefung 38, die an die Art, Form und Geometrie des Rührreibschweißstiftes 41, der tatsächlichen Wanddicke d im Stoß 16 und dem Werkstoff der Fügepartner 2 und 3 angepasst ist;
b) Positionieren dieser Vertiefung 38 unter dem Stumpf 16 entsprechend seiner 31 ermittelten Lage;
c) Eintauchen des Rührschweißstiftes 41 mit seiner Spitze 42 in den Stoß 16 soweit in die Vertiefung 38 bis die Eindringtiefe t einen Wert erreicht, der größer ist als die tatsächliche Wanddicke d der Partner 2 und 3,
d) Ausbilden einer Schweißnahtwurzel 40 in der Vertiefung 38 und
e) Abtrennen der Schweißnahtwurzel 40 durch Fräsen oder Schleifen.

Dadurch, dass die Mischzone 47 bis in die Vertiefung 39 gelangt, ist eine vollkommene Durchschweißung der Rundnaht an den druckbeaufschlagten Fügepartner 2 und 3 sichergestellt.

**Bezugszeichenliste**

| | |
|---|---|
| Flansch-Rohr-Flansch-Anordnung | 1 |
| Aluminiumrohr | 2 |
| Flansche | 3 |
| Maschinenbett | 4 |
| Einspanneinheiten | 5, 6 |
| Laufschienenpaar | 7 |
| Aufnahme | 8 |
| Direktantrieb | 9 |
| Hülse | 10 |
| Flanschscheibe | 11 |
| Bohrungen | 12 |
| Antriebswelle | 13 |
| Befestigungsflansch | 14 |
| Primärbacken | 14 |
| Zentrier- und Spannscheibe | 15 |
| Stoß | 16 |
| Antrieb für 6 | 17 |
| Bremse | 18 |
| Aufnahme von 6 | 19 |
| Direktantrieb | 20 |
| Brückenträger | 21 |
| Servomotor für 21 | 22 |
| Brücke | 23 |
| Kreuzschlitten | 24 |
| Rührreibschweißwerkzeug | 25 |
| Servomotore für 25 | 26, 27 |
| Motor | 28 |
| Werkzeugspindel | 29 |
| Sensor | 30 |
| Hauptsteuerung | 31 |
| Primärbacken | 32 |
| Sekundärbacken | 33 |
| Primärhebel | 34 |
| Sekundärhebel | 35 |
| Antrieb | 36 |
| Oberseite von 32, 33 | 37 |
| Vertiefung | 38 |
| Auffangraum | 39 |
| Schweißnahtwurzel | 40 |
| Rührreibschweißstift | 41 |
| Spitze von 41 | 42 |
| Rückwandseite am Stoß | 43 |
| Schulterbereich von 25 | 44 |
| Rundnaht | 45 |
| Mischzone | 46 |
| Abstand Spitze 42 zu Rückwandseite 43 | A |
| Drehachsen | A1, A2 |
| Breite der Vertiefung 38 | B |
| Durchmesser von 41 | D |
| Tatsächliche Wanddicke von 2, 3 | d |
| Höhe der Vertiefung 38 | H |
| Hohlkörperachse | LA |
| Eindringtiefe | t |

## Patentansprüche

**1.** Vorrichtung zum vollkommenen Durchschweißen einer Rundnaht an rotationssymmetrischen Hohlkörpern, beispielsweise einer Flansch-Rohr-Flansch-, Flansch-Rohr- oder Rohr-Rohr-Anordnung (1), die durch Rührreibschweißen im Stoß (16) miteinander verbunden werden, mit einem sich an den Innendurchmesser der Hohlkörper anpassbaren, mittig zur Hohlkörperachse (LA) angeordneten Spannkörper, wobei der Spannkörper als Schweißbadsicherung in Form einer in kreissegmentförmige Primär und Sekundärbacken (32,33) aufgeteilten Zentrier- und Spannscheibe (15) ausgebildet ist, einem die in Einspanneinheiten (5,6) gehaltenen Hohlkörper (2,3) um ihre Hohlkörperachse (HA) in Rotation versetzenden Antrieb (17), einem Rührreibschweißwerkzeug (25), das einen gegenüber dem Stoß (16) vorschieb- und zurückziehbaren rotierbaren Rührschweißstift (41) aufweist und einer Steuerung (31), die mit dem Antrieb (17) und dem Rührreibschweißwerkzeug (25) zum Einstellen der Anpresskräfte und der Rotationsgeschwindigkeit der Hohlkörper (2,3), zur Einstellung der Rotationsgeschwindigkeit des Rührreibschweißwerkzeugs (25) und der Lage des Rührreibschweißwerkzeuges zum Stoß (16) verbunden ist, **dadurch gekennzeichnet, dass** die Primär- und Sekundärbacken (32, 33) der Zentrier- und Spannscheibe (15) mit einer quer zur Hohlkörperachse (LA) der Hohlkörper (2,3) zueinander fluchtend umlaufenden Vertiefung (38) versehen sind, wobei der Rührreibschweißstift (41) mit seiner Spitze (42) durch den Stoß (16) hindurch eine Eintauchtiefe (t) hat, die größer als die tatsächliche Wanddicke (d) der Hohlkörper (2,3) ist und dass die Rundnaht (45) eine an die Vertiefung (38) angepasste Schweißnahtwurzel (40) aufweist.

**2.** Vorrichtung nach Anspruch 1, **dadurch gekenzeichnet**, dass die Vertiefung (38) mindestens eine Höhe (H) aufweist, die an den Abstand (A) der Spitze (42) des Rührreibschweißstiftes (41) zur Rückwandseite (43) der Hohlkörper (2,3) für eine vollkommene Durchschweißung im Stoß (16) angepasst ist.

**3.** Vorrichtung nach Anspruch 2, **dadurch gekennzeichnet, dass** die Höhe (H) der Vertiefung (38) zwischen 0,2 mm und 5 mm beträgt.

**4.** Vorrichtung nach Anspruch 1, **dadurch gekennzeichnet, dass** die Vertiefung (38) eine Breite (B) hat, die den Durchmesser (D) des Rührreibschweißstiftes (41) bis maximal um das 2fache übersteigt.

**4.** Vorrichtung nach Anspruch 1, **dadurch gekennzeichnet, dass** die Schweißnahtwurzel (40) der Rundnaht (45) eingeebnet ist.

**5.** Verfahren zum vollkommenen Durchschweißen einer Rundnaht von Stoßverbindungen an Hohlkörpern mit einer Vorrichtung nach Anspruch 1, bei dem die rotationssymmetrischen Hohlkörper (2,3) im Stoß (16) durch eine sich an den Innendurchmesser der Hohlkörper (2,3) anpassbaren, in Form einer in kreissegmentförmige Primär und Sekundärbacken (32,33) aufgeteilten Zentrier- und Spannscheibe (15) fixiert und um die Hohlkörperachse (LA) mit einem Antrieb (17) in Rotation versetzt werden, während in den rotierenden Stoß (16) ein vorschieb- und zurückziehbarer rotierender Rührreibschweißstift (41) eines Rührreibschweißwerkzeuges (25) eintaucht, wobei die Rotationsgeschwindigkeit der Hohlkörper (2,3), die Drehgeschwindigkeit und die Anpresskraft des Rührreibschweißwerkzeuges (25) sowie die Lage des Rührreibschweißwerkzeuges (25) zur Lage des Stoßes (16) über einen Sensor (30) durch eine Steuerung (31) eingestellt wird, **gekennzeichnet durch** folgende Schritte:
a) Vorsehen einer in die Primär- und Sekundärbacken (32,33) eingebrachten quer zur Hohlkörperachse (HA) zueinander fluchtend umlaufenden Vertiefung (38), die an die Art, Form und geometrische Abmessung des Rührreibschweißstiftes (41), der tatsächlichen Wanddicke (d) im Stoß (16) und dem Werkstoff der Fügepartner (2,3) angepasst ist;
b) Positionieren dieser Vertiefung (38) unter dem Stoß (16) entsprechend seiner ermittelten Lage;
c) Eintauchen des Rührreibschweißstiftes (41) mit seiner Spitze (42) **durch** den Stoß (16) soweit in die Vertiefung (38) bis seine Eindringtiefe (t) einen Wert erreicht, der größer ist als die tatsächliche Wanddicke (d) der Hohlkörper (2,3),
d) Ausbilden einer Schweißnahtwurzel (40) in der Vertiefung (38) und
e) Abtrennen der Schweißnahtwurzel (40) **durch** Fräsen oder Schleifen.
